# EUROPEAN PATENT APPLICATION

(11) **EP 4 782 482 A1**
(43) Date of publication of application: **29.07.2026**
(21) Application number: 25190307.6
(22) Date of filing: 17.07.2025
(51) Int. Cl.: C08J 3/20, A41G 1/00, B44C 1/24, B44C 5/06, C08J 5/18

(54) **MULTIFUNCTIONAL ARTIFICIAL PLANT ORGAN, MULTIFUNCTIONAL ARTIFICIAL PLANT AND METHOD FOR MANUFACTURING THE SAME**

(30) Priority: 24.01.2025 CN 202510123159
(71) Applicant: Nixan (Heyuan) Company Limited, Heyuan City Guangdong (CN)
(72) Inventor: LEE, Ee Teak, Heyuan City (CN); LIN, Heng, Heyuan City (CN); CHOW, Lam Tim Simon, Heyuan City (CN)
(74) Representative: Finnegan Europe LLP

(57) **Abstract**

The present disclosure relates to a multifunctional artificial plant organ, a multifunctional artificial plant, and a method for manufacturing the same. The method for manufacturing the multifunctional artificial plant organ described in the present disclosure includes: preparing a multifunctional PET material, and processing the multifunctional PET material into the multifunctional artificial plant organ. The method for manufacturing the artificial plant provided in the present disclosure can improve the production efficiency of artificial plant organs or artificial plants, and improve the simulation degree and durability thereof. Furthermore, the artificial plant organs or artificial plants manufactured by the method are more environmentally friendly and safer, and have multiple practical performances.

## Description

### TECHNICAL FIELD

The present disclosure relates to the technical field of artificial plant, and in particular, to a multifunctional artificial plant organ, a multifunctional artificial plant and a method for manufacturing the same.

### BACKGROUND

Artificial plants are imitations that imitate plant forms and are designed and produced from highly simulated materials. Artificial plants have been rapidly applied and developed in today's society as they have the advantages of not being limited by natural conditions such as sunlight, air and water, and needing no care. With the increase of people's specific needs and the continuous development of the industry, traditional artificial plants made of polyvinyl chloride (PVC) materials can no longer meet people's needs. For example, artificial plants may need to be placed in a high temperature environment for a long time. However, the current artificial plants made of PVC materials are prone to deformation and discoloration when exposed to heat, and may sometimes cause a fire, further leading to safety issues. In addition, problems of PVC materials such as poor environmental friendliness, high cost and lack of simulation degree are difficult to solve.

### SUMMARY

Accordingly, it is necessary to provide a multifunctional artificial plant organ or a multifunctional artificial plant, and a method for manufacturing the same, to improve the simulation degree of artificial plants, reduce the cost, and be more environmentally friendly and safer on the one hand, while enabling it to have multiple practical functions, so as to meet people's more specific needs or achieve applications in more scenarios on the other hand.

In a first aspect, the present disclosure provides a method for manufacturing a multifunctional artificial plant organ, including the following steps: preparing a multifunctional polyethylene terephthalate (PET) material; and processing the multifunctional PET material into the multifunctional artificial plant organ.

In an embodiment, the multifunctional PET material includes a multifunctional PET, a multifunctional biaxially oriented polyester film (BOPET), a multifunctional PET wire drawing, or a combination thereof.

In an embodiment, preparing the multifunctional PET material includes: preparing PET pellets; adding one or more additives to the PET pellets to prepare multifunctional PET pellets; and processing the multifunctional PET pellets into the multifunctional PET material.

In an embodiment, the one or more additives are selected from the group consisting of: color powder, light stabilizer, antistatic agent, flame retardant, anti-UV agent, antioxidant, matting agent, brightener, foaming agent, color-changing agent, antibacterial agent and combinations thereof.

In an embodiment, the multifunctional artificial plant organ includes an artificial root, an artificial stem, an artificial leaf, an artificial flower, an artificial fruit, and an artificial seed.

In a second aspect, the present disclosure provides a multifunctional artificial plant organ manufactured by the method described in the first aspect.

In a third aspect, the present disclosure further provides a method for manufacturing a multifunctional artificial plant, including the following steps: manufacturing a multifunctional artificial plant organ by the method described in the first aspect; and assembling the multifunctional artificial plant organ into the multifunctional artificial plant.

In a fourth aspect, the present disclosure further provides a multifunctional artificial plant manufactured by the method described in the third aspect.

In a fifth aspect, the present disclosure further provides a multifunctional PET material for manufacturing the aforementioned multifunctional artificial plant organ or multifunctional artificial plant.

In an embodiment, the multifunctional PET material includes a multifunctional PET, a multifunctional biaxially oriented polyester film (BOPET), a multifunctional PET wire drawing, or a combination thereof.

In the method for manufacturing the multifunctional artificial plant organ or multifunctional artificial plant described in the present disclosure, by preparing a multifunctional PET material and processing it to artificial plant organs or artificial plants, products with various desired functions can be efficiently prepared, while ensuring the simulation degree of artificial plants. In addition, as PET materials used in the present method is more environmentally friendly than materials used in traditional artificial plants, and will not release harmful substances in subsequent use, the artificial plants manufactured by the present method are therefore further more environmentally friendly and safer.

### BRIEF DESCRIPTION OF THE DRAWINGS

FIG. 1 shows a schematic flow diagram of a method for manufacturing a multifunctional artificial plant organ according to one embodiment of the present disclosure;
FIG. 2 shows a schematic flow diagram of the preparation of a multifunctional PET material in a method for manufacturing a multifunctional artificial plant organ according to one embodiment of the present disclosure;

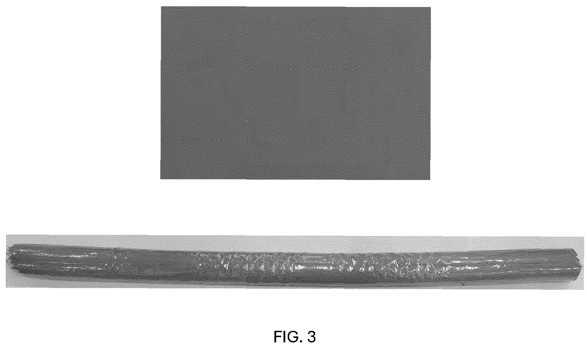

FIG. 3 shows some schematic diagrams of multifunctional PET materials prepared according to the process shown in FIG. 2, the upper panel is BOPET, and the lower panel is PET wire drawing;
FIG. 4 shows a schematic flow diagram of a method for manufacturing a multifunctional artificial plant according to one embodiment of the present disclosure; and
FIG. 5 shows finished multifunctional artificial plants (in the middle) manufactured according to some embodiments of the present disclosure.

### DETAILED DESCRIPTION

In order to facilitate the understanding of the present disclosure, the present disclosure will be described more fully hereinafter with reference to the related accompanying drawings. Various embodiments of the present disclosure are presented in the accompanying drawings. However, the present disclosure may be embodied in many different forms and is not limited to the embodiments described herein. Rather, these embodiments are provided to make the present disclosure more thorough and complete.

All technical and scientific terms used herein have the same meaning as commonly understood by those of ordinary skill in the art to which the present disclosure applies, unless otherwise defined. The terms used in the specification of the present disclosure herein are for the purpose of describing specific embodiments only and are not intended to limit the present disclosure.

The term "artificial plant" used herein refers to a decorative product that imitates plant form and is designed and produced from highly simulation materials.

The term "artificial plant organ" used herein refers to an artificial root, an artificial stem, an artificial leaf, an artificial flower, an artificial fruit, an artificial seed of an artificial plant and the like, which are semi-finished products of artificial plants. In addition, these artificial plant organs can further be combined or assembled as required, which is also one of the semi-finished products of artificial plants.

The term "artificial plant component" used herein refers to an auxiliary component involved in the process of manufacturing an artificial plant, including but not limited to a support, a filler, a fastener, an additive, a binder, and the like.

The term "PET" refers to a compound of polyethylene terephthalate, which can be obtained by preparation or purchased directly. The PET obtained by recycling is referred to herein as "recycled PET (rPET)". The term "polyethylene terephthalate (PET) material" used herein refers to various forms of materials or substrates obtained based on PET as raw materials, including PET, BOPET, PET wire drawing and the like.

The term "biaxially oriented polyester film (BOPET)" used herein refers to a high quality film prepared from polyester resin. BOPET herein can be produced by any method known to those skilled in the art. For example, the following process is mainly used for production in China: PET drying, heating and melting, extrusion casting, longitudinal stretching of thick sheets, transverse stretching, winding, slitting and packaging, and then further processing. BOPET itself can be glossy, and produce a similar effect to the reflection of real leaves when exposed to light.

The term "PET wire drawing" used herein refers to a form obtained by processing PET into a thin and long wire using a machine. The PET wire drawing herein can be produced by any method known to those skilled in the art.

The term "multifunctional" used herein means having multiple different functions or properties, such as color development, light stability, antistatic, flame retardancy, UV resistance, anti-oxidation, matte, brightening, foaming, color change and antibacterial functions or properties, etc., through a certain method. Therefore, a multifunctional PET material refers to a PET material having, for example, the aforementioned multiple different functions or properties. References herein to a PET material and the contents included therein generally refer to a multifunctional PET material, unless otherwise specified.

The term "embossing" used herein refers to a process of changing the thickness of a material under the action of a mold to emboss concave and convex patterns or words on the surface of the material. In some embodiments of the present disclosure, the PET material may be optionally embossed to form uneven embossing on its surface.

The term "PET pellets" used herein refers to a raw material of PET, which is not limited in form, but is preferably in the form of granules, particles, flakes, or scraps, etc.

In order to make the objects, technical solutions and advantages of the present disclosure clear, the present disclosure will be further described in detail below with reference to the accompanying drawings and some embodiments. It should be understood that the specific embodiments described herein are only used to explain the present disclosure and are not intended to limit the present disclosure.

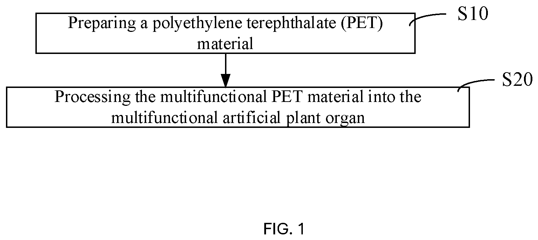

As shown in FIG. 1, in some embodiments, a method for manufacturing a multifunctional artificial plant organ may include:
S10: preparing a multifunctional PET material; and
S20: processing the multifunctional PET material into the multifunctional artificial plant organ.

In S10, the multifunctional PET can be designed and selected according to the requirements for the artificial plant organ, wherein the "multifunctional" is optionally color development, light stability, antistatic, flame retardancy, UV resistance, anti-oxidation, matte, brightening, antibacterial, etc. and combinations thereof, and the specific implementation method is described in detail below.

In some embodiments, the multifunctional PET material may include a multifunctional PET, a multifunctional biaxially oriented polyester film (BOPET), a multifunctional PET wire drawing, or a combination thereof. The selection of the specific form of the PET material can be determined according to the requirements of the final product. In some embodiments, only one form of PET may be selected, while in other embodiments, more than one PET material may be selected and combined to prepare a multifunctional artificial plant organ. In some embodiments, BOPET can be selected to manufacture an artificial tree trunk, and PET wire drawing can be selected to manufacture an artificial leaf.

In some embodiments, PET can be purchased directly. In other embodiments, PET can be obtained by preparation, for example, by recycling plastic products made of PET materials and processing them into PET, the resulting PET is called recycled PET (rPET).

In some embodiments, raw materials of BOPET and PET wire drawing can be selected from rPET or directly purchased PET.

In some embodiments, the method for manufacturing a PET material can use methods and tools commonly used in the art, such as using a biaxial orientation stretching machine to manufacture BOPET, and using a wire drawing machine to manufacture PET wire drawing.

In S20, processing the multifunctional PET material into a multifunctional artificial plant organ may include processing multifunctional PET material into an artificial plant organ using common means known in the art, including but not limited to cutting, winding, assembling, and the like. For example, in some embodiments, the multifunctional PET material can be cut into a desired shape to assemble into an artificial plant organ. Cutting may be performed using means known in the art, including but not limited to manual cutting, machine cutting, and the like.

As known in the art, the artificial plant organ may include an artificial root, an artificial stem, an artificial leaf, an artificial flower, an artificial fruit, and an artificial seed. In the present disclosure, the multifunctional PET material can be optionally processed into one or more of artificial root, artificial stem, artificial leaf, artificial flower, artificial fruit, and artificial seed according to design requirements. For example, if the desired artificial plant organ is an artificial leaf, the cut multifunctional PET material such as BOPET, and other desired artificial plant components such as leaf veins, can be further assembled into an artificial leaf. If the desired artificial plant organ is a pine needle, the artificial pine needle can be obtained by directly cutting the PET wire drawing. The resulting artificial plant organ has high tensile strength and is not easily damaged. Optionally, the shape of leaf is, for example, strip, oval, heart, needle, palm, etc. and combinations thereof.

In some embodiments, the multifunctional material is processed into an artificial plant organ, that is, the multifunctional PET material is processed into individual separate root, stem, leaf, and the like. However, in some embodiments, in S20, the artificial plant organ processed from the multifunctional PET material may sometimes be integrated, depending on design requirements and processing flow. For example, when the multifunctional PET material is BOPET, leaves and stems connected to each other can be produced on the same sheet of BOPET, that is, the cutting is designed such that the cut BOPET can be assembled into a stem with leaves such as a branch with leaves after certain processing. This can reduce processing steps and save costs, and reduce defects in artificial plants. In some embodiments, in order to increase the thickness of a leaf and make the tree product look denser and more beautiful, two or more sheets of BOPET can be placed in parallel operating positions by using, for example, a stretching machine, cut separately at the same time, and wound around two iron wires, respectively, and then the two wound branches are wound together to form a single, denser branch. This production mode of integrating multiple sheets of BOPET together is herein referred to as a "multi-winding" pattern, and the mode of manufacturing a single sheet of BOPET into a branch is referred to as a "single winding" pattern. In some embodiments, the manufactured branch can be in a single winding or multi-winding pattern, such as double winding, triple winding, etc. as required. In some embodiments, a thickness of a manufactured single sheet of BOPET can be 10 µm to 200 µm, for example, 50 µm, 70 µm, or 100 µm. In some embodiments, the thickness of the single sheet of BOPET can be, for example, equal to or more than 65 µm, which makes the artificial tree in the aforementioned "double winding" pattern not only dense and beautiful, but also closer to real trees.

In some embodiments, when the multifunctional PET material is PET wire drawing, the length and diameter of the PET wire drawing can be adjusted as required to better meet various requirements.

In the method for manufacturing the artificial plant organ, by processing the prepared multifunctional PET material into a multifunctional artificial plant organ, one the one hand, various plant organs can be simulated efficiently, and the simulation degree of the artificial plant can be ensured, which is more environmentally friendly and safer. On the other hand, more importantly, by replacing traditional PVC or PET with the multifunctional PET material, the resulting artificial plants can have multiple functions, achieving wide applications in various scenarios.

In other embodiments, after preparing the multifunctional PET material, the method may further include: embossing the multifunctional PET material to form an uneven embossing on a surface of the multifunctional PET material. In some embodiments, the surface of the multifunctional PET material can be subjected to a pressure by using tools such as a concave-convex mold and an embossing roller, resulting in plastic deformation on the surface of the multifunctional PET material, which in turn generating textures or patterns on its surface. These textures and patterns also change the way light is reflected and scattered. Specifically, the uneven surface structure formed by embossing will cause light to diffusely reflect on the surface of the multifunctional PET material, reducing the proportion of specular reflection and thus reducing glossiness. In this way, embossing with different depths and sizes can be embossed as required, and artificial plant organs with different glossiness and embossing sizes can thus be obtained, to simulate plant organs at different growth stages, which further improves the simulation degree of the artificial plants and thereby improving the visual realism of the artificial plant. For example, the uneven embossing can be formed on the surface of the multifunctional PET material by embossing with an embossing roller. A shape of the embossing can be designed as required, including but not limited to circle, square, rectangle, quadrilateral, triangle, oval, strip, etc. and combinations thereof. The multifunctional PET material can be partially or completely embossed, depending on the design requirements. For example, the multifunctional PET material can be partially embossed, wherein the embossed portion is subsequently processed into an artificial leaf, while the unembossed portion is subsequently processed into an artificial stem. For example, by pasting artificial leaves with different glossiness on the artificial stem according to the growth law of plants, the simulation degree of the artificial plant can be effectively improved. Different glossiness can be selected and given to different plant organs as required, that is, different plant organs can have different glossiness. For example, the glossiness of the artificial leaf may be brighter than that of the artificial stem, so as to make it more closely resemble the real plants in terms of visual realism.

In certain embodiments, it may not include the step of embossing the multifunctional PET material. In other words, in some embodiments, for example, forming embossing on the surface of the artificial leaf to change the overall glossiness of the artificial leaf may not be performed, and there is no limitation in the present disclosure for this.

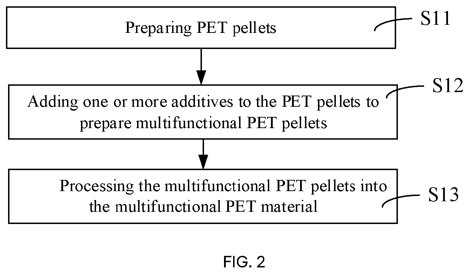

Referring to FIG. 2, in some embodiments, step S10 of preparing a multifunctional PET material may include the following steps:
S11: preparing PET pellets;
S12: adding one or more additives to the PET pellets to prepare multifunctional PET pellets; and
S13: processing the multifunctional PET pellets into the multifunctional PET material.

In step S11, PET from various sources may be selected, for example, PET may be prepared or directly purchased. For preparing PET, it can be prepared by using any method known in the art, such as chemical method, physical method, etc. In some embodiments, a recycled PET, i.e., rPET may be obtained by a recycling method. The recycled product of PET material can be processed to obtain the PET pellets. The processing can be carried out using means well known in the art, as long as PET pellets can be obtained. For example, PET pellets can be obtained by crushing a recycled PET plastic product (e.g., a plastic water bottle). Specifically, the used PET plastic water bottle is recycled, and then is crushed into PET granules using, for example, a crusher. In the present disclosure, the recycling rate of the PET plastic product can reach 100%. The crushed PET pellets can be completely used as raw materials for preparation, without adding or supplementing other substances as main raw materials. This process can meet the requirements of GRS standard certification. The PET plastic water bottle is used in huge quantities, has a wide range of sources and is reproducible. In addition, the PET used for the body of bottle is of high purity, which reduces the purification cost and is more environmentally friendly. In an alternative embodiment, the PET pellets can also be purchased directly, which is not limited in the present disclosure.

In S12, one or more additives are added to the PET pellets to prepare multifunctional PET pellets, that is, a secondary granulation is performed. Specifically, in some embodiments, one or more additives can be mixed together with PET pellets in different proportions to produce multifunctional PET pellets. Then, in S13, the multifunctional PET pellets are further used to prepare the multifunctional PET material.

The additives that can be used include, but are not limited to: color powder, light stabilizer, antistatic agent, flame retardant, anti-UV agent, antioxidant, matting agent, brightener, foaming agent, color-changing agent, antibacterial agent, etc. and combinations thereof. The type, amount, and combination of the above additives can be adjusted by those skilled in the art according to actual requirements. Under normal circumstances, additives commonly used in the art can be applied to the present disclosure. In some embodiments, each additive may be added in an amount of 1 wt% to 25 wt% of the entire composition (i.e., a combination of the additive and the PET pellets), for example, 1 wt% to 20 wt%, 1 wt% to 15 wt%, 1 wt% to 10 wt%, 1 wt% to 5 wt%, or 1 wt% to 3 wt%. Under normal circumstances, the above additives commonly used in the art can be applied to the present disclosure.

For example, in some embodiments, a color powder can be added to PET pellets to prepare a PET material with a color of the color powder, such as green, yellow, brown, white, etc., and the surface of the PET material has a bright effect and high glossiness. The PET material is directly prepared by adding color powder to PET pellets, and subsequent cutting is performed without additional coloring, afterwards an artificial plant organ and an artificial plant product is obtained. This can significantly reduce the production cost while improving production efficiency. In addition, the artificial plant obtained in this way itself presents a corresponding color, such as green, red, or brown, no need to worry about fading and is highly durable. The concentration of color powder can be adjusted according to actual requirements. In actual production, when it is required to manufacture an artificial plant or artificial plant organ with brighter color and higher color saturation, the concentration of color powder can be increased, such that the surface color of the prepared PET material is brighter and more saturated. For example, by changing the concentration of color powder, artificial leaves with different brightness and color saturation can be manufactured, to simulate leaves of different types and in different growth stages. Furthermore, these artificial leaves can be fixed onto the trunk of the artificial tree according to the growth law of the tree, which can further improve the simulation degree of the artificial tree.

In other embodiments, a flame retardant may be added to PET pellets, such that the PET material has a flame retardant effect, and thus the artificial plant organ manufactured from the PET material also has a flame retardant effect. In some embodiments, a halogen-free flame retardant is used. According to the composition, flame retardants can be divided into two categories: halogen-containing flame retardants and halogen-free flame retardants. Halogen-containing flame retardants will release a large amount of smoke and harmful gases in the event of fire, causing great harm to people's health and the environment. Due to concerns about human health and environmental protection, halogen-free flame retardants have attracted increasing attention due to their advantages such as high efficiency, environmental protection and safety. Halogen-free flame retardants are mainly divided into phosphorus-based flame retardants (such as ammonium polyphosphate, red phosphorus, and melamine salts; phosphate-based, phosphazene, and phosphaphenanthrene compounds), nitrogen-based flame retardants (such as melamine and its derivatives, dicyandiamide and its derivatives, etc.), silicon-based flame retardants (such as silicone), inorganic metal flame retardants (such as magnesium hydroxide, aluminum hydroxide, hydrotalcite, etc.), bio-based flame retardants (such as vegetable oils with different phosphorus groups introduced into the main chain), etc. The type and amount of the halogen-free flame retardant can be selected as required. Under normal circumstances, halogen-free flame retardant additives commonly used in the art can be applied to the present disclosure.

In some embodiments, a matte PET material can be prepared by adding a matting agent to PET pellets, wherein the addition of the matting agent gives the surface of the PET material a matte effect and low glossiness. The matting agent includes full-matte matting agent and semi-matte matting agent. The full-matte matting agent has a matte degree of, for example, 5 GU to 15 GU, and the semi-matte matting agent has a matte degree of, for example, 15 GU to 30 GU. Full-matte matting agent and/or semi-matte matting agent can be selected according to actual requirements. Matting agent can provide a non-gloss or weak glossy effect, such that the glossiness of the surface of the PET material is changed, thereby obtaining the PET material with desired glossiness. By printing transparent matting agent, the color and glossiness of the PET material can be closer to real plants, thereby improving the simulation degree of the artificial plant produced by the method. The matting agent can be, for example, epoxy resin matting agent, ND-110 matting agent, L-1030/1031 matting agent, metal soap, wax, and the like.

In some embodiments, an anti-UV agent can be added to PET pellets to prepare a PET material with UV resistance effect. The addition of anti-UV agent makes the resulting PET material resistant to ultraviolet rays and prevents or delays discoloration. Common anti-UV agents include inorganic anti-UV agents, such as titanium dioxide and zinc oxide; organic anti-UV agents, such as UV absorber UV-531, anti-UV finishing agent HTUV100, etc.

In some embodiments, an antistatic agent can be added to PET pellets to prepare a PET material with antistatic effect. The addition of antistatic agent can prevent static electricity accumulation to reduce the uncomfortable touch when artificial plants come into contact with the human body, while avoiding some safety hazards, such as explosions caused by static electricity sparks igniting certain flammable objects. Commonly used antistatic agents include cationic, anionic, and nonionic antistatic agents. Cationic antistatic agents are usually long-chain alkyl quaternary ammonium, phosphorus, or phosphonium salts, with chloride as a counter ion. Anionic antistatic agents are usually alkali metal salts of alkyl sulfonic acids, phosphoric acid, or dithiocarbamic acid. Nonionic antistatic agents usually include ethoxylated aliphatic alkyl amines, ethoxylated alkyl acid amines such as ethoxylated lauryl amide, and glyceryl monostearate (GMS).

In some embodiments, an antibacterial agent may be added to PET pellets to produce a PET material with antibacterial effect, which may prevent bacterial growth and make the product safer and more durable. Antibacterial agents are generally divided into inorganic antibacterial agents, organic antibacterial agents, and natural antibacterial agents. Common inorganic antibacterial agents include metal antimicrobial agents such as silver, copper, and zinc. Common organic antibacterial agents include vanillin or ethyl vanillin compounds, acylanilines, imidazoles, thiazoles, isothiazolone derivatives, quaternary ammonium salts, biguanides, phenols, etc. Common natural antibacterial agents mainly come from the extraction of natural plants, such as chitin, mustard, castor oil, wasabi, etc.

In other embodiments, multiple additives may be used simultaneously. For example, a color powder and a matting agent are used, and the prepared PET material can present the color of the color powder, such as green, yellow, brown, white, etc., while the surface of the PET material has a matte effect and low glossiness. For another example, a color powder, a matting agent, a flame retardant, an anti-UV agent, an antistatic agent, and antibacterial agent may be used simultaneously, so that the prepared PET material has color development, matte, flame retardancy, UV resistance, antistatic and antibacterial functions, simultaneously, and thus the artificial plant organs and artificial plants prepared therefrom have corresponding functions. Depending on the desired design, under reasonable circumstances, any additive or combination thereof may be attempted to add to achieve the desired function.

Regarding step S13, the multifunctional PET pellets may be processed into the multifunctional PET material using any common method known in the art, depending on the type of the multifunctional PET material desired. when the PET material is BOPET, functional PET pellets may be first melted to obtain polyester resin blocks, and then the polyester resin blocks may be dried, melted, extruded, cast, and stretched longitudinally and transversely to obtain BOPET. For another example, when the PET material is PET wire drawing, functional PET pellets may be melted to obtain polyester resin blocks, and then the polyester resin blocks may be dried, melted, extruded, and wire drawn to obtain PET wire drawing.

Since PET pellets are refined and polymerized from petroleum as raw materials, the PET pellets contain antimony. Although antimony-containing compounds have flame retardant effects, antimony is toxic and can damage human organs and even induce cancer. In some embodiments, in the present disclosure, the antimony element in the PET pellets used to prepare a PET material is chemically replaced by titanium element. The titanium element has low harm to human body, thus the artificial plant produced is safer.

The aforementioned embodiments can be combined arbitrarily unless they are mutually exclusive.

In the aforementioned method for manufacturing the artificial plant organ, the multifunctional PET material is prepared, and then a multifunctional artificial plant organ is prepared. On the one hand, the artificial plant organ prepared from the multifunctional PET material has stronger tensile and impact resistances and is highly durable. In addition, by adding various additives to PET pellets, such as adding color powder, matting agent, halogen-free flame retardant, anti-UV agent, antistatic agent, and antibacterial agent and the like, the properties of the PET material can be further improved, such that the artificial plant prepared from the multifunctional PET material also has corresponding properties to achieve application in more scenarios. On the other hand, the multifunctional PET material is formed in one time, which reduces secondary processing, reduces the utilization rate of materials and personnel resources, improves production efficiency and reduces production costs.

It should be understood that, although the various steps in the flowcharts involved in the aforementioned embodiments are sequentially displayed as indicated by the arrows, these steps are not necessarily performed in the order indicated by the arrows. Unless explicitly stated herein, the performing order of these steps is not be limited strictly, and these steps may be performed in other orders. Moreover, at least a part of the steps in the flowcharts involved in the aforementioned embodiments may include a plurality of steps or phases, which are not necessary to be performed simultaneously, but may be performed at different times. The order of execution of these steps or stages is not necessarily sequential, but may be performed by turns or alternately with other steps or at least part of the steps or stages in other steps.

The present disclosure further provides an artificial plant organ manufactured by the aforementioned method. The artificial plant organ provided according to an embodiment of the present disclosure has stronger tensile and impact resistances, while being highly durable and has the advantage of not easily damaged. In addition, by adding various additives to PET pellets, such as adding color powder, matting agent, halogen-free flame retardant, anti-UV agent, antistatic agent, and antibacterial agent and the like, the properties of the PET material can be further improved, such that the artificial plant organ prepared from the multifunctional PET material also has corresponding properties to achieve application in more scenarios.

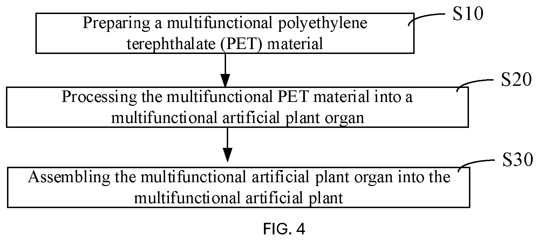

As shown in FIG. 4, the present disclosure further provides a method for manufacturing a multifunctional artificial plant, which may include the following steps:
S10: preparing a multifunctional PET material;
S20: processing the multifunctional PET material into a multifunctional artificial plant organ; and
S30: assembling the multifunctional artificial plant organ into the multifunctional artificial plant.

The relevant contents involved in S10 and S20 are consistent with the aforementioned contents and will not be repeated here.

In S30, the multifunctional artificial plant organ can be assembled into the multifunctional artificial plant, i.e., the multifunctional artificial plant product, by any suitable means. Artificial plant components can be used to better complete the assembly, including but not limited to a support, a filler, a fastener, an additive, and the like. The support and the filler can be any objects used to support and fill the plant organ, such as used as an internal material of an artificial plant stem, which may include foam, plastic, metal, fiber, and the like. The fastener is used to better fix the plant organ, such as connecting the artificial leaves and artificial stems together, and it may include plastic, metal, fiber, and the like. And the additive can be any suitable auxiliary agent added to achieve certain functions or effects, including but not limited to binder, fragrance agent, glitter, and the like.

For example, in the case of manufacturing an artificial pine tree, the BOPET can be cut into long strips, and then fixed around a long strip-shaped filler to form an artificial stem (i.e., a branch). The PET wire drawing is then cut into needle-shaped leaves, such as pine needles, then fixed into a cluster by a fixing object such as iron wire, and then a plurality of clusters of pine needles are fixed to a branch to form a branch with pine needles. Suitable materials are used to serve as a main tree trunk and a base, and they are finally assembled together to form the artificial pine tree product.

Similarly, this method has the same advantages as the above method. The artificial plant organ prepared from the multifunctional PET material has stronger tensile and impact resistances and is highly durable. In addition, by adding various additives to PET pellets, such as adding color powder, matting agent, halogen-free flame retardant, anti-UV agent, antistatic agent, and antibacterial agent and the like, the properties of the PET material can be further improved, such that the multifunctional artificial plant prepared from the multifunctional PET material also has corresponding properties to achieve application in more scenarios. On the other hand, the multifunctional PET material is formed in one time, which reduces secondary processing, reduces the utilization rate of materials and personnel resources, improves production efficiency and reduces production costs.

In addition, the present disclosure further provides a multifunctional artificial plant, manufactured by the method shown in FIG. 4.

The artificial plant prepared from the multifunctional PET material has stronger tensile and impact resistances and is highly durable. In addition, by adding various additives to PET pellets, such as adding color powder, matting agent, halogen-free flame retardant, anti-UV agent, antistatic agent, antibacterial agent and the like, the properties of the PET material can be further improved, such that the artificial plant prepared from the multifunctional PET material also has corresponding properties to achieve application in more scenarios.

In addition, the present disclosure further provides a multifunctional PET material for manufacturing the aforementioned multifunctional artificial plant organ or multifunctional artificial plant. In some embodiments, the multifunctional PET material may include one or more additives selected from the group consisting of: color powder, light stabilizer, antistatic agent, flame retardant, anti-UV agent, antioxidant, matting agent, brightener, foaming agent, color-changing agent, antibacterial agent and combinations thereof. In some embodiments, the multifunctional PET material includes a multifunctional PET, a multifunctional BOPET, a multifunctional PET wire drawing, or a combination thereof.

### Example

In order to more clearly describe and understand the method and product of the present disclosure, details of the present disclosure are further illustrated and described below using an artificial pine tree as an example of artificial plant.

The materials and instruments involved in these examples were all common materials and instruments in the art, and the materials can be prepared by oneself or purchased from the market.

### Example 1: Preparation of multifunctional PET material

### Example 1.1: Preparation of PET pellets

A transparent PET plastic water bottle was recycled, cleaned, and crushed using a crusher, and then processed into PET granules. In this example, the recycling rate of the PET plastic product can reach 100%, the crushed PET pellets can be completely used as raw materials for preparation, without adding or supplementing other substances as main raw materials, and this process can meet the requirements of GRS standard certification.

### Example 1.2: Secondary granulation of PET

In this example, two colors of PET granules, green and brown, were prepared. The PET granules prepared in Example 1.1 were used, and color powder (green or brown), halogen-free flame retardant, semi-matte matting agent, anti-UV agent, antistatic agent, and antibacterial agent were mixed with the PET granules by a granulator. After stirring for a certain time at a certain temperature to achieve uniform mixing (the stirring time and temperature need to be adjusted as required), green or brown multifunctional PET granules were obtained, respectively.

### Example 1.3: Preparation of multifunctional BOPET

The brown multifunctional PET granules prepared in Example 1.2 were loaded in a large barrel for drying, and then extruded into a sheet using an extruder. The thick sheet was then stretched longitudinally and transversely, then rolled up, slit and packaged, waiting for subsequent processing, and a brown multifunctional BOPET was obtained. The multifunctional BOPET had color development, flame retardancy, matte, UV resistance, antistatic, and antibacterial functions.

### Example 1.4: Preparation of multifunctional PET wire drawing

The green multifunctional PET granules prepared in Example 1.2 were loaded in a large barrel for drying, then extruded using an extruder, and then wire drawn using a wire drawing machine, and a green multifunctional PET wire drawing was obtained. The multifunctional PET wire drawing had color development, flame retardancy, matte, UV resistance, antistatic, and antibacterial functions.

### Example 2: Processing multifunctional BOPET and multifunctional PET wire drawing into multifunctional artificial plant organs respectively

The multifunctional BOPET obtained in Example 1.3 was cut by a stretching machine. The specific cutting mode and size can be adjusted as needed. In this example, it was cut into strips of different lengths and widths. After cutting, the BOPET was wound and fixed to a stem filler such as iron wire using the stretching machine to form artificial stems of different lengths and widths.

The multifunctional PET wire drawing obtained in Example 1.4 was cut by a cutting machine. The specific cutting mode and size can be adjusted as needed. In this example, it was cut into pine needles of different lengths, and the pine needles were wound and fixed to the above artificial stem with BOPET fixed by a stretching machine. A branch with pine needles was then obtained.

The above operations of the two materials can be carried out separately, or simultaneously by configuring the stretching machine.

### Example 3: Assembly of multifunctional artificial plant

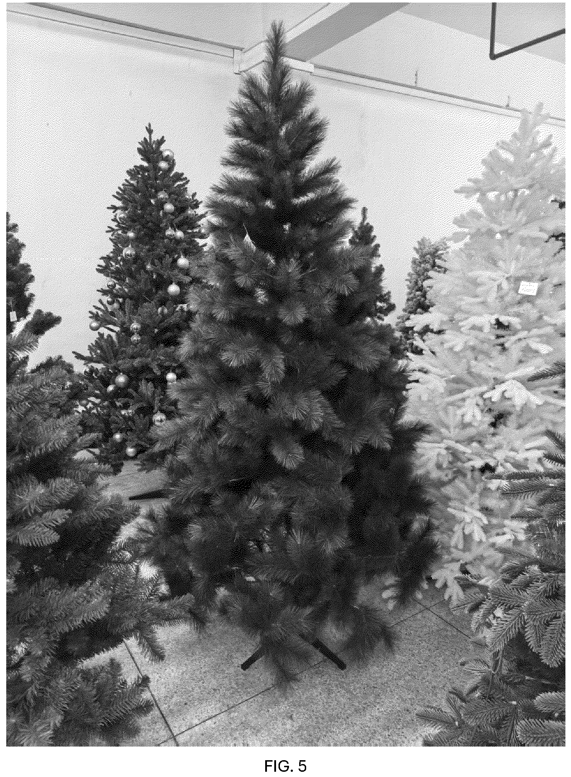

According to the design requirements and taking the actual shape and characteristics of the tree into consideration, the multiple branches obtained in Example 2 were assembled together. As shown in the middle of FIG. 5, it is an example of an assembled artificial pine tree, which can be used as, for example, a Christmas tree. Sample 1 (BOPET part) and Sample 2 (PET wire drawings part) of the tree product were selected for subsequent performance test.

### Comparative Example 1: Artificial tree manufactured from BOPET and PET wire drawing without additives

An artificial tree product of Example 3 was manufactured using the same method again, except that, in the preparation process of BOPET and PET wire drawing, no color powder, flame retardant, anti-UV agent, matting agent, antistatic agent, and antibacterial agent were added. The BOPET part of Comparative Example 1 was selected as Sample 3 and the PET wire drawing part of Comparative Example 1 was selected as Sample 4 for subsequent performance test.

### Example 4: Performance Test

The aforementioned samples of the artificial trees obtained in Example 3 and Comparative Example 1 were tested for various performance. Each sample was tested three times in parallel. The test standards or test conditions and results are shown in Table 1 below.

Test environment: room temperature: 25 ± 5 °C ; relative humidity: 50%+/-20%; luminance: 500-1000 Lux.

Visual conditions: the inspectors had good eyesight and their eyes were 30-40cm away from the sample during inspection.

Visual inspection time: the inspection time for the appearance of each sample was 8-15 seconds.

**Table 1**

| Test type | Test standard, Test condition, and Acceptance criteria | Test Result | | | |
|---|---|---|---|---|---|
| | | Example Sample 1 | Example Sample 2 | Comparative Example Sample 3 | Comparative Example Sample 4 |
| Color fastness to rubbing Test | EN ISO 105-X12, AATCC 8, EN 13138-1/- 2/-3, EN ISO 25649-1; | qualified | qualified | no color | no color |
| | Use a friction tester with a head load of 9 N, rub with cotton cloth, speed of 1 cycle/second, stroke of 104±3 mm, and rub for 10 cycles; | | | | |
| | Acceptance criteria: the staining grade should be greater or equal to Grade 4; no obvious fading, discoloration of the sample color. | | | | |
| Flame retardant Test | UL 588; | qualified | qualified | unqualified | unqualified |
| | For a 6-inch sample, ignite the top part and keep the flame in contact with the sample for 5 seconds before removing the flame; | | | | |
| | Acceptance criteria: combustion rate ≤ 4 in/min. | | | | |
| UV aging Test | ISO 4892-3, GB/T 16422.3; | qualified | qualified | unqualified | unqualified |
| | Drying: 0.76 w/m², 60±3°C *8h; | | | | |
| | Condensation: 50±3°C *4h; | | | | |
| | perform 8 cycles for a total of 96 h; | | | | |
| | Acceptance criteria: discoloration level ≥Grade 4, no cracks, brittleness, or the like on the surface. | | | | |
| High temperature Test | 60±2°C, 48 h; | qualified | qualified | unqualified | unqualified |
| | Acceptance criteria: no damage to the surface appearance, no change in color. | | | | |
| Low temperature Test | Low temperature -20±2°C, 48h; | qualified | qualified | unqualified | unqualified |
| | Acceptance criteria: no damage to the surface appearance, no change in color. | | | | |
| Adhesion Test | GB/T 9286, ISO 2409, ASTM D3359; | qualified | qualified | unqualified | unqualified |
| | Stick a 3M810 tape on the sample, press back and forth with a finger 3 times for 15 seconds, then quickly tear off the tape; | | | | |
| | Acceptance criteria: no obvious discoloration. | | | | |
| Elasticity Test | Width 40 mm × length 460 mm, place at room temperature for 10 min; wind around a small rubber tube and tie with a rubber band, and place at 50°C*20 min (small rubber tube having a diameter of 25 mm); | qualified | qualified | unqualified | unqualified |
| | unfold the sample and measure the diameter of the sample; | | | | |
| | Acceptance criteria: ≥ 30 mm. | | | | |
| Folding Test | Fold the sample twice, press with glass sheets on top and bottom, load 3 kg weight on the top, and place at a high temperature of 60°C for 48 h; a low temperature of -20°C for 48 h; | qualified | qualified | unqualified | unqualified |
| | Acceptance criteria: no crack at the fold. | | | | |
| Matte Test | Visual inspect for matte finish | qualified | qualified | unqualified | unqualified |
| Antistatic test | NPD requirements; | qualified | qualified | unqualified | unqualified |
| | At 24°C and 46% humidity: place the sample on a wooden workbench, use insulating gloves, and 1) measure the surface electrostatic intensity; 2) measure the static electricity generated by the mutual friction of the samples. Use an electrostatic tester to measure the electrostatic intensity. | | | | |

It can be concluded from the above table that the artificial trees with various additives have many excellent properties, such as matte, good flame retardancy, excellent resistance to UV aging, high and low temperature resistance, strong adhesion, good elasticity, good folding performance, and antistatic properties. These excellent properties can make the multifunctional artificial plants more widely used in various fields.

It can be seen that the artificial plant organs or artificial plants manufactured by the method of the present disclosure not only overcome the problems of non-realistic, discoloration, deformation, environmental pollution, and non-antibacterial of traditional PVC materials by using the multifunctional PET material, but also give the artificial plant organs or artificial plants multifunctionality on this basis, such as UV resistance, matte, flame retardancy, antistatic, and antibacterial, such that they can better meet people's special requirements and be more widely used in various applications.

Each of the technical features of the aforementioned embodiments can be combined arbitrarily. To simplify the description, not all the possible combinations of the technical features in the aforementioned embodiments are described. However, all of the combinations of these technical features should be considered as within the scope of the present disclosure, as long as such combinations do not contradict with each other.

The aforementioned embodiments merely illustrate several embodiments of the present disclosure, and the description thereof is specific and detailed, but it shall not be constructed as limiting the scope of the disclosure. It should be noted that a plurality of variations and modifications may be made by those skilled in the art without departing from the conception of the present disclosure, which are all within the protection scope of the present disclosure. Therefore, the protection scope of the present disclosure shall be subject to the appended claims.

## Claims

1. A method for manufacturing a multifunctional artificial plant organ, comprising the following steps:
preparing a multifunctional polyethylene terephthalate (PET) material; and
processing the multifunctional PET material into the multifunctional artificial plant organ.

2. The method for manufacturing the multifunctional artificial plant organ of claim 1, wherein the multifunctional PET material comprises a multifunctional PET, a multifunctional biaxially oriented polyester film (BOPET), a multifunctional PET wire drawing, or a combination thereof.

3. The method for manufacturing the multifunctional artificial plant organ of claim 1, wherein preparing the multifunctional PET material comprises:
preparing PET pellets;
adding one or more additives to the PET pellets to prepare multifunctional PET pellets; and
processing the multifunctional PET pellets into the multifunctional PET material.

4. The method for manufacturing the multifunctional artificial plant organ of claim 3, wherein the one or more additives are selected from the group consisting of: color powder, light stabilizer, antistatic agent, flame retardant, anti-UV agent, antioxidant, matting agent, brightener, foaming agent, color-changing agent, antibacterial agent and combinations thereof.

5. The method for manufacturing the multifunctional artificial plant organ of claim 1, wherein the multifunctional artificial plant organ comprises an artificial root, an artificial stem, an artificial leaf, an artificial flower, an artificial fruit, and an artificial seed.

6. A multifunctional artificial plant organ, manufactured by the method of any one of claims 1 to 5.

7. A method for manufacturing a multifunctional artificial plant, comprising the following steps:
manufacturing a multifunctional artificial plant organ by the method of any one of claims 1 to 5; and
assembling the multifunctional artificial plant organ into the multifunctional artificial plant.

8. A multifunctional artificial plant, manufactured by the method of claim 7.

9. A multifunctional PET material for manufacturing the multifunctional artificial plant organ of claim 6 or the multifunctional artificial plant of claim 8.

10. The multifunctional PET material of claim 9, wherein the multifunctional PET material comprises a multifunctional PET, a multifunctional biaxially oriented polyester film (BOPET), a multifunctional PET wire drawing, or a combination thereof.
